# EUROPÄISCHE PATENTSCHRIFT

(11) **EP 4 281 503 B1**
(45) Veröffentlichungstag und Bekanntmachung des Hinweises auf die Patenterteilung: **17.07.2024**
(21) Anmeldenummer: 22713282.6
(22) Anmeldetag: 25.01.2022
(51) Int. Cl.: C08L 67/02

(54) **ERBSENSTÄRKEHALTIGE POLYMERZUSAMMENSETZUNG**
PEA STARCH-CONTAINING POLYMER COMPOSITION
COMPOSITION DE POLYMÈRE CONTENANT DE L'AMIDON DE POIS

(30) Priorität: 25.01.2021 DE 102021101538
(43) Veröffentlichungstag der Anmeldung: 29.11.2023
(73) Patentinhaber: bio-tec Biologische Naturverpackungen GmbH & Co. KG, 46446 Emmerich (DE)
(72) Erfinder: FRIEDEK, Wolfgang, 47551 Bedburg-Hau (DE); ANGENENDT, Leon, 46446 Emmerich (DE); DUßLING, Maximilian, 47533 Kleve (DE); KOLLMETZ, Norbert, 46446 Emmerich (DE); SCHULTE, Michael, 49716 Meppen (DE)
(74) Vertreter: Cohausz & Florack
(86) Internationale Anmeldenummer: PCT/EP2022/051587
(87) Internationale Veröffentlichungsnummer: WO 2022/157380

(56) Entgegenhaltungen:
- WO-A1-2014/166938
- CN-A- 108 948 681
- US-A1- 2007 241 483
- US-B1- 6 962 950

## Beschreibung

Die vorliegende Erfindung betrifft eine Polymerzusammensetzung, ein Verfahren zur Herstellung einer Polymerzusammensetzung, die Verwendung einer Polymerzusammensetzung und Formteile, Folien oder Fasern, enthaltend eine Polymerzusammensetzung.

Kunststoffe bezeichnen Werkstoffe, die aus Makromolekülen aufgebaut sind. Ihre Vielseitigkeit und ihre technischen Eigenschaften, wie Formbarkeit, Elastizität, Bruchfestigkeit und Beständigkeit sorgen dafür, dass sie für zahlreiche Anwendungen verwendet werden. Je nach Anwendung werden ganz unterschiedliche mechanische Anforderungen an Kunststoffe gestellt. Bei der Verwendung von Kunststoffen in Tragetaschen sind beispielsweise eine hohe Zugfestigkeit, eine hohe Reißdehnung, eine hohe Weiterreißfestigkeit und ein hoher Dart Drop der verwendeten Kunststofffolien erstrebenswert.

Konventionelle Kunststoffe weisen eine Reihe von unerwünschten Eigenschaften auf: Bei ihrer Herstellung werden große Mengen an fossilen Ressourcen, wie Erdöl und Erdgas verbraucht, viele von ihnen sind nicht oder kaum biologisch abbaubar und sie weisen oft eine schlechte CO₂-Bilanz auf. Zur Verringerung des Verbrauchs fossiler Ressourcen und zum Erzielen einer besseren CO₂-Bilanz werden in den letzten Jahren zunehmend Kunststoffe aus nachwachsenden Rohstoffen, wie Pflanzen, hergestellt. Polymere, die zumindest teilweise oder vollständig auf nachwachsenden Rohstoffen basieren, werden auch "biobasierte" Polymere genannt.

Viele Kunststoffe sind sehr langlebig und werden in der Natur nur sehr langsam, teilweise über Jahrzehnte bis Jahrhunderte, abgebaut. In Anbetracht der aktuellen Umweltentwicklungen, wie der Vermüllung der Ozeane, steigt daher der Bedarf nach biologisch abbaubaren Kunststoffen, also Kunststoffen, die durch in der Natur vorkommende Mikroorganismen, wie Pilze oder Bakterien, mittels Enzymen zersetzt werden können. Die biologische Abbaubarkeit von Kunststoffen hängt dabei alleine von der chemischen Struktur des Kunststoffes und seinem Vermögen ab, sich durch biologische Aktivität in natürlich vorkommende Stoffwechselendprodukte zu verwandeln. Deswegen sind biobasierte Kunststoffe auch nicht zwangsläufig biologisch abbaubar.

Die Hauptanwendungen biologisch abbaubarer Polymerzusammensetzungen liegen im Verpackungs- und Cateringbereich. Daneben existieren Anwendungen in der Landwirtschaft und im Gartenbau sowie im Pharma- und Medizinbereich. Besonders relevant sind biologisch abbaubare Polymerzusammensetzungen für die Fertigung von Abfallsäcken, Tragetaschen, Einweggeschirr (Becher, Tassen, Teller, Besteck), Verpackungsfolien, Flaschen, Obst- und Gemüseschalen (so genannte Trays), Verpackungshilfsmitteln (Loose-fill-Chips), Mulchfolien, Blumentöpfen und dergleichen.

Besonders im Bereich von Abfallsäcken und Tragetaschen werden dabei besonders hohe mechanische Anforderungen bezüglich Reißfestigkeit und Belastbarkeit an die aus Polymerzusammensetzungen hergestellten Kunststofffolien gestellt.

Besonders erstrebenswert sind aus den genannten Gründen Kunststoffe, die über gute mechanische Eigenschaften verfügen, und gleichzeitig zumindest teilweise biobasiert und/oder biologisch abbaubar sind.

Aus dem Stand der Technik sind Polymerzusammensetzungen zur Herstellung solcher Kunststoffe auf Basis von Stärke und aliphatisch-aromatischen Copolyestern bekannt.

So ist etwa eine weichmacherfreie thermoplastische Polymerzusammensetzung auf Kartoffelstärkebasis, die sich insbesondere zur Blasfolienextrusion, Flachfolienextrusion und zum Spritzgießen von biologisch abbaubaren Produkten eignet, unter dem Handelsnamen BIOPLAST^{®} GF 106/02 von der Firma BIOTEC GmbH & Co. KG in Emmerich (Deutschland) kommerziell erhältlich.

Die Herstellung und Eigenschaften von weichmacherfreien thermoplastischen Polymer-Blends auf Basis von Stärke und aliphatisch-aromatischen Copolyestern werden beispielsweise in der Druckschrift EP 0 596 437 B1 beschrieben.

Wie im "Handbook of Biodegradable Polymers, 2nd Edition", Verlag Smithers Rapra Technology, 2014, auf der Seite 265 beschrieben, sind die üblichen und wichtigsten Stärkequellen Feldfrüchte wie Mais, Weizen, Kartoffeln, Tapioka und Reis.

Die WO 2005/120808 A1 beschreibt ein Verfahren zur Herstellung von biologisch abbaubaren Kunststofffolien, umfassend die Herstellung einer biologisch abbaubaren Blasfolie und eine anschließende monoaxiale oder biaxiale Kaltverstreckung. Das eingesetzte biologisch abbaubare Polymer kann ein aliphatisch-aromatischer Copolyester, zum Beispiel Polybutylenadipat-terephthalat sein. Zudem kann die eingesetzte Polymerzusammensetzung Stärke enthalten. CN 108 948 681 A offenbart Stärke-modizierte PBAT Copolyester. Die Fertigung von Abfallsäcken wird erwähnt. Außerdem wird in Anspruch 4 in einer Liste erwähnt, dass die Stärke Erbsenstärke sein kann.

Nachteile der aus dem Stand der Technik bekannten Polymerzusammensetzungen sind, dass die mechanischen Eigenschaften daraus hergestellter Formteile, Folien und Fasern verbesserungswürdig sind, oder dass diese nicht oder nur zu geringen Teilen biobasiert sind und/oder nicht oder nur langsam bzw. unvollständig biologisch abbaubar sind.

Der vorliegenden Erfindung lag die Aufgabe zugrunde, eine Polymerzusammensetzung bereitzustellen, die einen oder mehrere Nachteile des Stands der Technik zumindest teilweise überwindet. Die Polymerzusammensetzung soll dabei zu ausgezeichneten mechanischen Eigenschaften von daraus hergestellten Formteilen, Folien und Fasern führen, zumindest teilweise biobasiert sein und/oder biologisch abbaubar sein. Die Polymerzusammensetzung soll insbesondere zur Herstellung von besonders stabilen und belastbaren Abfallsäcken und Tragetaschen geeignet sein. Insbesondere sollen aus der Polymerzusammensetzung hergestellte Folien eine hohe Zugfestigkeit, eine hohe Reißdehnung, eine hohe Weiterreißfestigkeit und einen hohen Dart Drop aufweisen.

Eine weitere Aufgabe der vorliegenden Erfindung besteht darin, ein Verfahren bereitzustellen, mit dem eine solche Polymerzusammensetzung hergestellt werden kann. Insbesondere soll das Verfahren schnell und effizient sein.

Alle oder einige dieser Aufgaben werden erfindungsgemäß durch eine Polymerzusammensetzung gemäß Anspruch 1, ein Verfahren gemäß Anspruch 14, eine Polymerzusammensetzung gemäß Anspruch 20, eine Verwendung gemäß Anspruch 21, sowie Formteile, Folien oder Fasern gemäß Anspruch 22 gelöst.

Vorteilhafte Ausgestaltungen der Erfindung sind in den abhängigen Ansprüchen angegeben und werden nachfolgend im Einzelnen erläutert.

Die Erfindung stellt eine Polymerzusammensetzung bereit, die jeweils bezogen auf das Gesamttrockengewicht der Polymerzusammensetzung, wenigstens folgende Komponenten enthält: a) 25,5 Gew.% bis 50 Gew.% Stärke, b) 30 Gew.% bis 74,5 Gew.% aliphatisch-aromatischer Copolyester, wobei die Stärke mindestens 25 Gew.% Erbsenstärke, bezogen auf das Gesamttrockengewicht der Stärke, enthält.

Überraschend hat sich gezeigt, dass aus der erfindungsgemäßen Polymerzusammensetzung hergestellte Folien eine besonders hohe Zugfestigkeit, Reißdehnung, Weiterreißfestigkeit und einen besonders hohen Dart Drop aufweisen. Die Zugfestigkeit ist ein Maß für die Folienfestigkeit und bezeichnet die maximale mechanische Zugspannung, die ein Material aushält. Sie ist daher ein wichtiges Maß für die mechanische Belastung, die eine Folie, beispielsweise als Material in einer Tragetasche, aushält. Die Reißdehnung ist ein Maß für die Elastizität eines Materials. Sie drückt die vorhandene Dehnung im Augenblick des Zerreißens aus. Die Reißdehnung wird in % relativ zur Ausgangslänge vor der Dehnung angegeben. Die Weiterreißfestigkeit bezeichnet die Eigenschaft eines Stoffes, auch bei Vorhandensein einer Einkerbung, nicht weiter zu reißen. Eine hohe Weiterreißfestigkeit ist daher wichtig, damit beispielsweise eine Tragetasche bei einer punktuellen Beschädigung durch einen spitzen Gegenstand beim Transport nicht weiterreißt. Der Dart Drop ist ein Maß für die Durchschlagfestigkeit eines Materials. Er bezeichnet das Gewicht eines Fallhammers, beim dem in 50 % der Falltests die Folie durchstoßen wird. Eine hoher Dart Drop ist daher wichtig, damit eine Folie bei mechanischer Belastung, zum Beispiel durch einen schweren Gegenstand in einer Tragetasche, nicht durchstoßen wird. Auf Grund dieser mechanischen Eigenschaften sind aus der erfindungsgemäßen Zusammensetzung hergestellte Folien besonders gut für Abfallsäcke und Tragetaschen geeignet. Zudem ist eine erfindungsgemäße Polymerzusammensetzung vorzugsweise zumindest teilweise biobasiert und biologisch abbaubar.

Ohne an eine bestimmte wissenschaftliche Theorie gebunden sein zu wollen, scheinen die vorteilhaften Eigenschaften der erfindungsgemäßen Polymerzusammensetzung sich auf den Erbsenstärkeanteil in der Polymerzusammensetzung zurückführen zu lassen. Insbesondere scheinen dabei das Amylose/Amylopektin-Verhältnis, das Molekulargewicht und/oder die molekulare Feinstruktur der Erbsenstärke, im Vergleich zu anderen Stärken wie Kartoffelstärke, ausschlaggebend zu sein.

Versuche haben gezeigt, dass eine Polymerzusammensetzung mit einem Anteil von, bezogen auf das Gesamttrockengewicht der Polymerzusammensetzung, 25,5 Gew.% bis 50 Gew.% Stärke für besonders gute mechanische Eigenschaften und gleichzeitig für einen hohen biobasierten Anteil und eine gute biologische Abbaubarkeit sorgt. Ein niedrigerer Anteil an Stärke verringert den biobasierten Anteil in der Polymerzusammensetzung und verringert gleichzeitig die biologische Abbaubarkeit. Ein höherer Anteil an Stärke verschlechtert die Verarbeitbarkeit der Polymerzusammensetzung und führt bei der Folienherstellung zu Folien mit geringer Stabilität und schlechten mechanischen Eigenschaften wie einer niedrigen Zugfestigkeit, Reißdehnung, Weiterreißfestigkeit und einem niedrigen Dart Drop. Bei zu hohen Stärkeanteilen sind gar keine Folien herstellbar.

Ein Anteil von, bezogen auf das Gesamttrockengewicht der Polymerzusammensetzung, 30 Gew.% bis 74,5 Gew.% aliphatisch-aromatischem Copolyester sorgt für eine gute Verarbeitbarkeit der Polymerzusammensetzung und für gute mechanische Eigenschaften von aus der Polymerzusammensetzung hergestellten Formteilen, Folien oder Fasern, insbesondere Blasfolien. Zudem kann der aliphatisch-aromatische Copolyester teilweise oder vollständig biobasiert sein. Weiter erhöht der aliphatisch-aromatische Copolyester die Bioabbaubarkeit der Polymerzusammensetzung und von daraus hergestellten Formteilen, Folien und Fasern. Bei einem zu hohen oder zu niedrigen Anteil an aliphatisch-aromatischem Copolyester in der Polymerzusammensetzung können keine Formteile, Folien oder Fasern mit den gewünschten mechanischen Eigenschaften aus der Polymerzusammensetzung hergestellt werden.

Der Begriff "Stärke" umfasst hierin auch Stärkederivate. Stärkederivat, wie hier verwendet, bedeutet modifizierte bzw. funktionalisierte Stärke. Als Stärkederivat wird vorzugsweise Stärke eingesetzt, deren freie OH-Gruppen zumindest teilweise substituiert sind. In Frage kommt beispielsweise mit Ether und/oder Estergruppen modifizierte Stärke. Weitere Beispiele für geeignete Stärkederivate sind hydrophobierte oder hydrophilisierte Stärke, insbesondere z.B. Hydroxypropyl-Stärke oder Carboxymethylstärke. Die Stärke kann beispielsweise aus Kartoffel, Mais, Tapioka oder Reis gewonnen werden. Vorzugsweise wird native Stärke, also unmodifizierte bzw. nicht-funktionalisierte Stärke, zur Herstellung der erfindungsgemäßen Polymerzusammensetzungen verwendet.

Der Begriff "Gesamttrockengewicht" bedeutet hierin das Gesamtgewicht der jeweiligen Komponente bzw. Zusammensetzung ohne Wasser. Das bedeutet, dass der in der jeweiligen Stärke enthaltene Wasseranteil bei der Angabe des Gesamttrockengewichts und den jeweiligen Gewichtsanteilen nicht berücksichtigt wird. In einem Gemisch aus 50 g "feuchter" Erbsenstärke mit einem Wassergehalt von 10 Gew.%, bezogen auf das Gesamtgewicht der Erbsenstärke, und 50 g aliphatisch-aromatischem Copolyester, entspricht damit das Trockengewicht der Erbsenstärke 45 g und das Gesamttrockengewicht des Gemisches 95 g. Der Anteil an Erbsenstärke, bezogen auf das Gesamttrockengewicht des Gemisches, entspricht daher in diesem Fall 45 geteilt durch 95, also 47,4 Gew.%. Durch diese Angabe werden sowohl verschiedene Stärken mit unterschiedlichen Wasseranteilen, als auch der Stärkegehalt nach Verfahrensschritten, wie Trocknung oder Extrusion, besser vergleichbar.

Der Begriff "Erbsenstärke" bedeutet hierin aus Erbsen gewonnene Stärke, unabhängig von den vorher erfolgten Verfahrensschritten. Erbse bezeichnet hierin die Pflanzengattung der Erbsen (Pisum). Die Erbsenstärke kann daher von jeder Pflanzenart und jeder Varietät und Convarietät aus dieser Pflanzengattung stammen, also beispielsweise von Gartenerbsen, Ackererbsen, Palerbsen, Markerbsen und Zuckererbsen. Die zur Herstellung der erfindungsgemäßen Polymerzusammensetzungen verwendeten Erbsenstärken können dabei beispielsweise einen Restwasseranteil von 8 bis 12 Gew.%, bezogen auf das Gesamtgewicht der Erbsenstärke, enthalten. Vorzugsweise wird native Erbenstärke, also unmodifizierte bzw. nicht-funktionalisierte Erbsenstärke, zur Herstellung der erfindungsgemäßen Polymerzusammensetzungen verwendet.

Der Begriff "aliphatisch-aromatischer Copolyester" bezeichnet hierin einen Polyester, also ein Polymer mit mehreren Esterfunktionen -(COO)- in seiner Hauptkette, das aus mindestens zwei verschiedenartigen Monomereinheiten zusammengesetzt ist, wobei mindestens eine Monomereinheit ein aliphatischer Kohlenwasserstoff und mindestens eine Monomereinheit ein aromatischer Kohlenwasserstoff ist. Wenn hier von "aliphatisch-aromatischem Copolyester" die Rede ist, so sind damit auch Mischungen verschiedener aliphatisch-aromatischer Copolyester umfasst.

Bevorzugt enthält die Polymerzusammensetzung, jeweils bezogen auf das Gesamtgewicht der Polymerzusammensetzung, einen Wassergehalt von 0,01 Gew.% bis 5 Gew.%, insbesondere 0,03 Gew.% bis 3 Gew.%, 0,04 Gew.% bis 1,5 Gew.% oder 0,05 Gew.% bis 1 Gew.%. Der Wassergehalt beeinflusst die Eigenschaften von aus der Polymerzusammensetzung hergestellten Formteilen, Folien oder Fasern. Auch beeinflusst der Wassergehalt direkt die Verarbeitungseigenschaften der Polymerzusammensetzung. Bei einem zu niedrigen Wassergehalt besteht die Gefahr, dass die Bestandteile der Polymerzusammensetzung beim Erhitzen verbrennen. Bei einem zu hohen Wassergehalt können keine Formteile, Folien und Fasern mit den gewünschten mechanischen Eigenschaften aus der Polymerzusammensetzung hergestellt werden, insbesondere kann es bei der Weiterverarbeitung zu unerwünschter Blasenbildung kommen.

Gemäß einer bevorzugten Ausführungsform der erfindungsgemäßen Polymerzusammensetzung enthält die Stärke mindestens 30 Gew.%, insbesondere mindestens 40 Gew.%, mindestens 50 Gew.%, mindestens 60 Gew.%, mindestens 70 Gew.%, mindestens 80 Gew.%, mindestens 90 Gew.%, mindestens 95 Gew.%, mindestens 97 Gew.%, oder mindestens 99 Gew.% Erbsenstärke, jeweils bezogen auf das Gesamttrockengewicht der Stärke. Ein solcher Anteil an Erbsenstärke in der Stärke sorgt dafür, dass aus der Polymerzusammensetzung hergestellte Folien besonders gute mechanische Eigenschaften, wie eine hohe Zugfestigkeit, Reißdehnung, Weiterreißfestigkeit und einen hohen Dart Drop aufweisen.

Gemäß einer weiteren bevorzugten Ausführungsform der erfindungsgemäßen Polymerzusammensetzung liegt die Stärke in destrukturierter Form vor. Vorzugsweise wird die in der erfindungsgemäßen Polymerzusammensetzung enthaltene destrukturierte Stärke bei der Herstellung der Polymerzusammensetzung aus nativer Stärke durch mechanische und/oder thermische Destrukturierung gebildet. Destrukturiert bedeutet dabei, dass die granuläre, kristalline Struktur von nativer Stärke vollständig oder zumindest weitestgehend zerstört worden ist. Dies lässt sich beispielsweise bei Betrachtung von Blendquerschnitten im Rasterelektronenemikroskop leicht feststellen. Alternativ kann die Stärkephase der Polymerzusammensetzung isoliert werden und unter einem Polarisationsmikroskop auf das Vorhandensein von kristallinen Bestandteilen hin untersucht werden.

Von destrukturierter Stärke im Sinne dieser Erfindung sind Fälle zu unterscheiden, in denen native Stärke lediglich als Füllstoff verwendet wird und die granuläre Struktur der Stärke zumindest teilweise erhalten bleibt.

Destrukturierte Stärke kann zweckmäßigerweise in Form von (ggf. vorgefertigter) weichmacherhaltiger thermoplastischer Stärke (TPS) in der erfindungsgemäßen Polymerzusammensetzung vorliegen. Als Weichmacher kommen insbesondere Kohlenstoff-haltige Weichmacher wie Glycerin und/oder Sorbitol in Betracht. Bevorzugt ist die destrukturierte Stärke in der erfindungsgemäßen Polymerzusammensetzung jedoch möglichst weichmacherfrei.

Um auch ohne Zugabe von Kohlenstoff-haltigen Weichmachern destrukturierte Stärke erhalten zu können, wird native Stärke vorzugsweise zusammen mit mindestens einem hydrophoben Polymer und bei einem ausreichend hohen Wassergehalt unter Einwirkung hoher Scherkräfte und Temperaturen homogenisiert. Das Wasser wird vorzugsweise während oder am Ende des Homogenisierens wieder durch Trocknung ganz oder bevorzugt teilweise entfernt. Die Herstellung einer derartigen weichmacherfreien destrukturierten Stärke in Polymer-Blends mit aliphatisch-aromatischen Copolyestern ist beispielsweise in der Druckschrift EP 0 596 437 B1 beschrieben.

Vorzugsweise kann die erfindungsgemäße Polymerzusammensetzung, jeweils bezogen auf das Gesamttrockengewicht der Polymerzusammensetzung, 27 Gew.% bis 45 Gew.%, insbesondere 28,5 Gew.% bis 40 Gew.% oder 30 Gew.% bis 35 Gew.% Stärke, enthalten. Ein solcher Anteil an Stärke sorgt für besonders gute mechanische Eigenschaften und gleichzeitig für einen hohen biobasierten Anteil und eine gute biologische Abbaubarkeit. Ein niedrigerer Anteil an Stärke sorgt für einen geringeren biobasierten Anteil in der Polymerzusammensetzung und verringert gleichzeitig die biologische Abbaubarkeit. Ein höherer Anteil an Stärke verschlechtert die Verarbeitbarkeit der Polymerzusammensetzung und führt bei der Folienherstellung zu Folien mit geringer Stabilität und schlechten mechanischen Eigenschaften wie einer niedrigen Zugfestigkeit, Reißdehnung und Weiterreißfestigkeit und einem niedrigen Dart Drop. Bei zu hohen Stärkeanteilen sind gar keine Folien herstellbar.

Für die erfindungsgemäße Polymerzusammensetzung kommen insbesondere aliphatisch-aromatische Copolyester in Frage, die gemäß EN 13432 biologisch abbaubar sind und/oder eine Glasübergangstemperatur (Tg) kleiner 0 °C, insbesondere kleiner -4 °C, weiter bevorzugt kleiner -10 °C, noch weiter bevorzugt kleiner -20 °C und am bevorzugtesten kleiner -30 °C aufweisen. Die in der erfindungsgemäßen Polymerzusammensetzung enthaltenen aliphatisch-aromatischen Copolyester sind ferner vorzugsweise thermoplastisch.

Gemäß einer bevorzugten Ausführungsform der erfindungsgemäßen Polymerzusammensetzung handelt es sich bei dem aliphatisch-aromatischen Copolyester um einen Copolyester auf Basis von mindestens einer aliphatischen Dicarbonsäure mit 7 bis 22 Kohlenstoffatomen, einer aromatischen Dicarbonsäure mit 8 bis 20 Kohlenstoffatomen und einem Diol mit 2 bis 12 Kohlenstoffatomen.

Gemäß einer besonders bevorzugten Ausführungsform der erfindungsgemäßen Polymerzusammensetzung ist der aliphatisch-aromatische Copolyester ein statistischer Copolyester.

Gemäß einer weiter bevorzugten Ausführungsform der erfindungsgemäßen Polymerzusammensetzung ist der aliphatisch-aromatische Copolyester ein Copolyester auf Basis von mindestens Adipin- und/oder Sebacinsäure, insbesondere auf Basis von mindestens Adipinsäure.

Gemäß einer besonders bevorzugten Ausführungsform der erfindungsgemäßen Polymerzusammensetzung ist der aliphatisch-aromatische Copolyester ein Copolyester bzw. statistischer Copolyester auf Basis von 1,4-Butandiol, Adipinsäure und/oder Sebacinsäure und Terephthalsäure bzw. Terephthalsäurederivat, insbesondere Dimethylterephthalat DMT, insbesondere ein statistischer Copolyester auf Basis von 1,4-Butandiol, Adipinsäure und Terephthalsäure bzw. Terephthalsäurederivat, insbesondere Dimethylterephthalat DMT. Dieser kann insbesondere eine Glasübergangstemperatur (Tg) von -25 bis -40 °C, insbesondere -30 bis -35 °C, und/oder einen Schmelzbereich von 100 bis 120 °C, insbesondere 105 bis 115 °C, aufweisen. Ein solcher aliphatisch-aromatischer Copolyester sorgt dafür, dass die Polymerzusammensetzung biologisch abbaubar und kompostierbar ist. Zudem sorgt ein solcher aliphatisch-aromatischer Copolyester für ausgezeichnete mechanische Eigenschaften von aus der Polymerzusammensetzung hergestellten Formteilen, Folien oder Fasern. Ferner sorgt ein solcher aliphatisch-aromatischer Copolyester für eine hohe Zugfestigkeit, Reißdehnung, Weiterreißfestigkeit und einem hohen Dart Drop bei aus der Polymerzusammensetzung hergestellten Folien.

Gemäß einer weiteren bevorzugten Ausführungsform der erfindungsgemäßen Polymerzusammensetzung enthält die Polymerzusammensetzung, jeweils bezogen auf das Gesamttrockengewicht der Polymerzusammensetzung, 40 Gew.% bis 74,5 Gew.%, insbesondere 50 Gew.% bis 74,5 Gew.%, 55 Gew.% bis 70 Gew.% oder 60 Gew.% bis 70 Gew.% aliphatisch-aromatischen Copolyester. Eine solche Menge an aliphatisch-aromatischem Copolyester sorgt für eine gute Verarbeitbarkeit der Polymerzusammensetzung und führt zu guten mechanischen Eigenschaften von aus der Polymerzusammensetzung hergestellten Formteilen, Folien oder Fasern, insbesondere Blasfolien bei gleichzeitiger guter biologischer Abbaubarkeit. Bei einem zu hohen oder zu niedrigen Anteil an aliphatisch-aromatischem Copolyester in der Polymerzusammensetzung können keine Formteile, Folien oder Fasern mit den gewünschten mechanischen Eigenschaften aus der Polymerzusammensetzung hergestellt werden.

Weiter kann die erfindungsgemäße Polymerzusammensetzung, jeweils bezogen auf das Gesamttrockengewicht der Polymerzusammensetzung, 0,1 Gew.% bis 5 Gew.%, insbesondere 0,2 Gew.% bis 2 Gew.% oder 0,3 Gew.% bis 1 Gew.% Verarbeitungshilfsmittel, insbesondere Sorbitanmonostearat, enthalten. Ein solches Verarbeitungshilfsmittel hilft bei der Weiterverarbeitung der Polymerzusammensetzung, zum Beispiel bei der Blasfolienextrusion zur Herstellung von Blasfolien.

Bevorzugt enthält die erfindungsgemäße Polymerzusammensetzung, bezogen auf das Gesamttrockengewicht der Polymerzusammensetzung, weniger als 5 Gew.%, insbesondere weniger als 3 Gew.% oder weniger als 1 Gew.%, Kohlenstoff-enthaltende Weichmacher, insbesondere Glycerin oder Sorbitol. Weitere Beispiele für Kohlenstoff-enthaltende Weichmacher sind Arabinose, Lycose, Xylose, Glykose, Fructose, Mannose, Allose, Altrose, Galactose, Gulose, lodose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-, 1,5-Hexandiol, 1,2,6-, 1,3,5-Hexantriol, Neopentylglykol, Trimethilolpropan, Pentaerithritol, Sorbit und deren Acetat-, Ethoxylat- und Propoxylat-derivate. Weiter bevorzugt enthält die erfindungsgemäße Polymerzusammensetzung keine Kohlenstoff-enthaltenden Weichmacher. Obwohl die erfindungsgemäße Polymerzusammensetzung bevorzugt keine Kohlenstoff-enthaltenden Weichmacher enthält, verfügt sie über gute Verarbeitungseigenschaften und ist besonders gut zur Herstellung auch von elastischen Erzeugnissen, wie Folien, geeignet.

Die erfindungsgemäße Polymerzusammensetzung enthält ferner bevorzugt, bezogen auf das Gesamtgewicht der Polymerzusammensetzung, weniger als 10 Gew.% niedermolekulare Substanzen und ist dadurch im wesentlichen weichmacherfrei. Unter niedermolekularen Substanzen im Sinne der Erfindung werden Substanzen mit einem Molekulargewicht kleiner 500 g/mol, insbesondere kleiner 250 g/mol, verstanden. Niedermolekulare Substanzen im Sinne der Erfindung sind insbesondere Wasser, Glycerin, Sorbitol und/oder Mischungen daraus.

Die erfindungsgemäße Polymerzusammensetzung kann noch weitere Bestandteile, insbesondere weitere Polymere und/oder übliche Additive, wie zum Beispiel Verarbeitungshilfsmittel, Stabilisatoren, Antiflammmittel, Antiblockmittel und/oder Füllstoffe, enthalten.

Gemäß einer weiteren bevorzugten Ausführungsform der erfindungsgemäßen Polymerzusammensetzung ist die Polymerzusammensetzung gemäß EN 13432 biologisch abbaubar, insbesondere vollständig biologisch abbaubar. Dadurch kann eine Gefährdung der Tier- und Pflanzenwelt verhindert werden, wenn die erfindungsgemäße Polymerzusammensetzung oder daraus hergestellte Produkte, wie Tragetaschen oder Abfallsäcke, in die Umwelt gelangen.

Gemäß einer weiteren bevorzugten Ausführungsform der Erfindung besitzt die erfindungsgemäße Polymerzusammensetzung thermoplastische Eigenschaften. Vorzugsweise ist die Polymerzusammensetzung thermoplastisch verarbeitbar.

Die Erfindung stellt ferner ein Verfahren bereit, mit denen es möglich ist, die oben beschriebenen Polymerzusammensetzungen zu erhalten.

Grundsätzlich beinhalten die erfindungsgemäßen Verfahren die folgenden Schritte, wobei die einzelnen Schritte gleichzeitig oder nacheinander und in beliebiger Reihenfolge und Häufigkeit durchgeführt werden können:
(i) Herstellen eines Gemischs durch Mischen von, jeweils bezogen auf das Gesamttrockengewicht des Gemisches, wenigstens:
   a) 25,5 Gew.% bis 50 Gew.% Stärke,
   b) 30 Gew.% bis 74,5 Gew.% aliphatisch-aromatischem Copolyester, wobei die Stärke mindestens 25 Gew.% Erbsenstärke, bezogen auf das Gesamttrockengewicht der Stärke, enthält;
(ii) Homogenisieren des Gemischs unter Zuführen von thermischer und/oder mechanischer Energie;
(iii) Einstellen des Wassergehalts des Gemischs, so dass das Endprodukt einen Wassergehalt von kleiner 5 Gew.%, bezogen auf das Gesamtgewicht des Gemischs, aufweist.

Bevorzugt werden die Verfahrensschritte in der oben angegebenen Reihenfolge durchgeführt.

Für den aliphatisch-aromatischen Copolyester gilt das vorstehend zur erfindungsgemäßen Polymerzusammensetzung Gesagte analog. Für die zur Herstellung des Gemisches eingesetzten Mengen, jeweils bezogen auf das Gesamttrockengewicht des Gemisches, gilt das vorstehend für die in der erfindungsgemäßen Polymerzusammensetzung enthaltenen, jeweils auf das Gesamttrockengewicht der Polymerzusammensetzung bezogenen Mengen Gesagte analog. Für den Anteil an Erbsenstärke, bezogen auf das Gesamttrockengewicht der Stärke, gilt das vorstehend zur erfindungsgemäßen Polymerzusammensetzung Gesagte analog.

Das erfindungsgemäße Verfahren sieht vor, dass das Gemisch homogenisiert wird. Das Homogenisieren kann durch beliebige, dem auf dem Gebiet der Kunststofftechnik tätigen Fachmann geläufige Maßnahmen erfolgen. Vorzugweise erfolgt das Homogenisieren des Gemischs durch Dispergieren, Rühren, Kneten und/oder Extrudieren. Gemäß einer bevorzugten Ausführungsform der Erfindung wirken beim Homogenisieren Scherkräfte auf das Gemisch ein. Geeignete Herstellungsverfahren für stärkehaltige thermoplastische Polymere, die auch auf die Herstellung des erfindungsgemäßen polymeren Materials analog anwendbar sind, werden beispielsweise in der Druckschrift EP 0 596 437 B1 EP beschrieben. Dadurch wird ein gleichmäßiges Homogenisieren des Gemisches gewährleistet.

Gemäß einer bevorzugten Ausführungsform der Erfindung wird das Gemisch während des Homogenisierens (z. B. im Extruder) erwärmt. Gemäß einer weiter bevorzugten Ausführungsform der Erfindung wird das Gemisch beim Homogenisieren bzw.

Extrudieren auf eine Temperatur von 90 bis 250 °C, insbesondere 130 bis 220 °C, erwärmt.

Gemäß einer weiteren bevorzugten Ausführungsform des erfindungsgemäßen Verfahrens wird der Wassergehalt des Gemischs auf kleiner 3 Gew.%, insbesondere kleiner 1,5 Gew.% oder kleiner 1 Gew.%, bezogen auf das Gesamtgewicht des Gemischs, eingestellt. Es ist bevorzugt, den Wassergehalt der Polymerzusammensetzung gering zu halten, um eine gute Weiterverarbeitbarkeit zu ermöglichen.

Hier angegebene Wassergehalte können sich auf das aus dem Extruder austretende Material beziehen. Zur Bestimmung des Wassergehalts wird eine Probe schmelzförmiges Extrudat am Düsenausgang beim Austritt aus dem Extruder in einem verschließbaren Gefäß aufgefangen und dieses luftdicht verschlossen. Dabei ist darauf zu achten, dass das Gefäß möglichst vollständig mit Extrudat gefüllt ist, damit der Lufteinschluss in dem Gefäß möglichst gering gehalten wird. Nach Abkühlen des verschlossenen Gefäßes wird dieses geöffnet, eine Probe genommen und der Wassergehalt mittels Karl-Fischer Titration bestimmt.

Gemäß einer bevorzugten Ausführungsform des erfindungsgemäßen Verfahrens wird der Wassergehalt des Gemischs durch Entgasen des Gemischs, insbesondere durch Entgasen der Schmelze, eingestellt und/oder der Wassergehalt des Gemischs durch Trocknen des Gemischs während des Homogenisierens bzw. Extrudierens eingestellt. Dadurch werden Energie und Kosten eingespart, da kein weiterer Verfahrensschritt zum Einstellen des Wassergehalts erforderlich ist.

Gegenstand der Erfindung ist weiter eine Polymerzusammensetzung erhältlich nach dem erfindungsgemäßen Verfahren. Eine solche Polymerzusammensetzung ist besonders gut geeignet, um Folien mit einer besonders hohen Zugfestigkeit, Reißdehnung, Weiterreißfestigkeit und einem besonders hohen Dart Drop herzustellen. Auf Grund dieser mechanischen Eigenschaften sind aus einer solchen Zusammensetzung hergestellte Folien, insbesondere Blasfolien, besonders gut für Abfallsäcke und Tragetaschen geeignet. Zudem ist eine Polymerzusammensetzung erhältlich nach dem erfindungsgemäßen Verfahren zumindest teilweise biobasiert und biologisch abbaubar.

Gegenstand der Erfindung ist ferner die Verwendung einer erfindungsgemäßen Polymerzusammensetzung oder einer Polymerzusammensetzung erhältlich nach dem erfindungsgemäßen Verfahren zum Herstellen von Formteilen, Folien oder Fasern, insbesondere durch Blasfolienextrusion, Flachfolienextrusion oder Spritzgießen, insbesondere zum Herstellen von Folien durch Blasfolienextrusion. Diese Verwendung ermöglicht die Herstellung von Formteilen, Folien oder Fasern mit besonders guten mechanischen Eigenschaften, die zumindest teilweise biobasiert und biologisch abbaubar sind. Insbesondere ermöglicht die Verwendung das Herstellen von Folien mit einer hohen Zugfestigkeit, Reißdehnung, Weiterreißfestigkeit und einem hohen Dart Drop.

Gegenstand der Erfindung sind schließlich auch Formteile, Folien oder Fasern, enthaltend eine erfindungsgemäße Polymerzusammensetzung oder eine Polymerzusammensetzung erhältlich nach dem erfindungsgemäßen Verfahren. Diese Formteile, Folien oder Fasern weisen besonders gute mechanische Eigenschaften auf, sind zumindest teilweise biobasiert und biologisch abbaubar. Erfindungsgemäße Folien können Blas-, Flach- oder Gießfolien sein. Bevorzugte Foliendicken für erfindungsgemäße Blasfolien betragen von 10 bis 100 µm, für erfindungsgemäße Flachfolien von 150 bis 500 µm und für erfindungsgemäße Gießfolien von 10 bis 500 µm. Insbesondere weisen solche Folien, insbesondere Blasfolien, eine hohe Zugfestigkeit, Reißdehnung, Weiterreißfestigkeit und einen hohen Dart Drop auf. Dadurch eignen sie sich besonders gut zur Herstellung von Tragetaschen und Abfallsäcken.

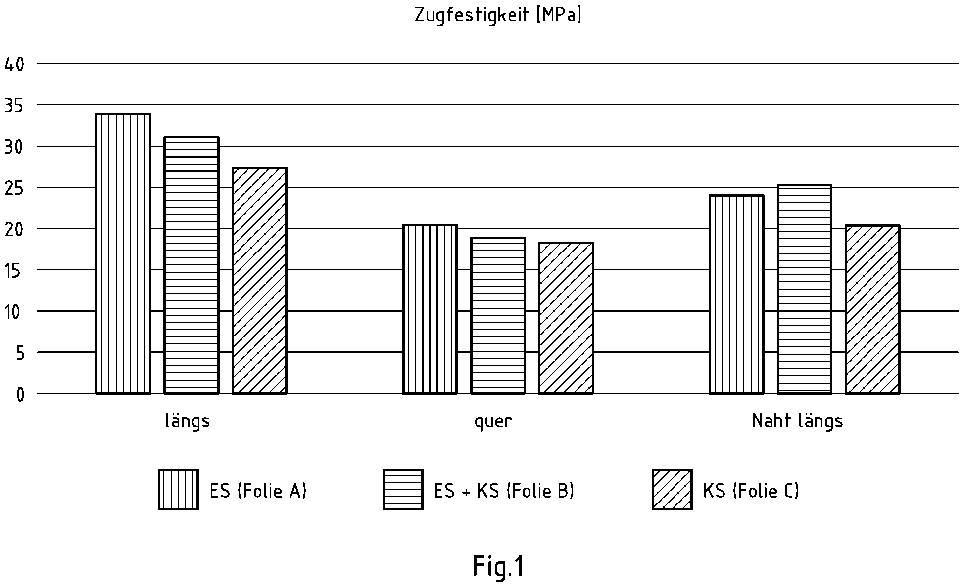

Das Prinzip der Erfindung soll im Folgenden anhand von den Erfindungsgegenstand nicht einschränkenden Beispielen unter Bezugnahme auf die fünf Figuren (Fig. 1 - Fig. 5) näher erläutert werden.
Fig. 1 zeigt einen Vergleich der Zugfestigkeiten einer aus einer erbsenstärkehaltigen Polymerzusammensetzung hergestellten Blasfolie (Folie A), einer aus einer erbsenund kartoffelstärkehaltigen Polymerzusammensetzung hergestellten Blasfolie (Folie B) und einer aus einer kartoffelstärkehaltigen Polymerzusammensetzung C hergestellten Blasfolie (Folie C) in Längs- und Querrichtung sowie an der Naht in Längsrichtung.

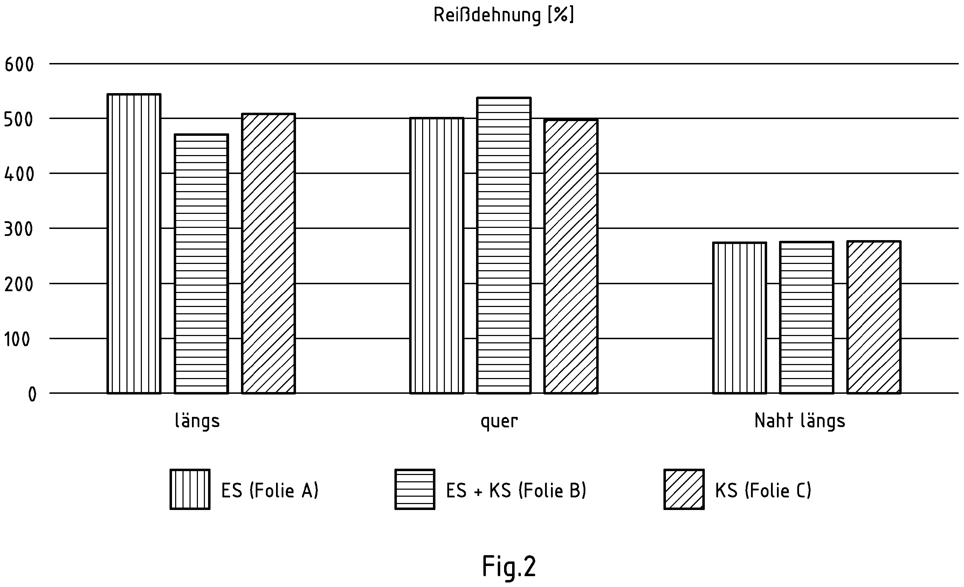

Fig. 2 zeigt einen Vergleich der Reißdehnung einer aus einer erbsenstärkehaltigen Polymerzusammensetzung hergestellten Blasfolie (Folie A), einer aus einer erbsenund kartoffelstärkehaltigen Polymerzusammensetzung hergestellten Blasfolie (Folie B) und einer aus einer kartoffelstärkehaltigen Polymerzusammensetzung C hergestellten Blasfolie (Folie C) in Längs- und Querrichtung sowie an der Naht in Längsrichtung.

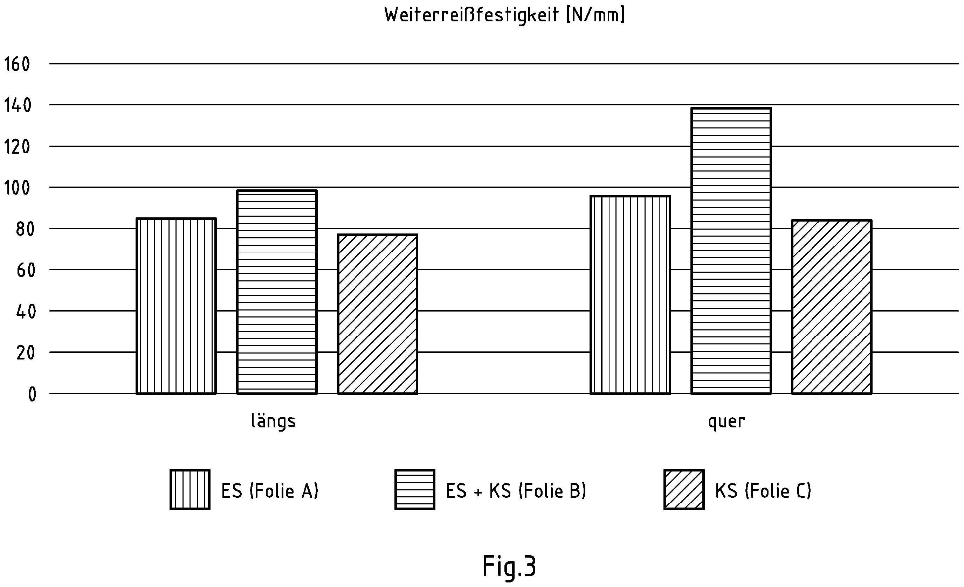

Fig. 3 zeigt einen Vergleich der Weiterreißfestigkeit einer aus einer erbsenstärkehaltigen Polymerzusammensetzung hergestellten Blasfolie (Folie A), einer aus einer erbsen- und kartoffelstärkehaltigen Polymerzusammensetzung hergestellten Blasfolie (Folie B) und einer aus einer kartoffelstärkehaltigen Polymerzusammensetzung C hergestellten Blasfolie (Folie C) in Längs- und Querrichtung.

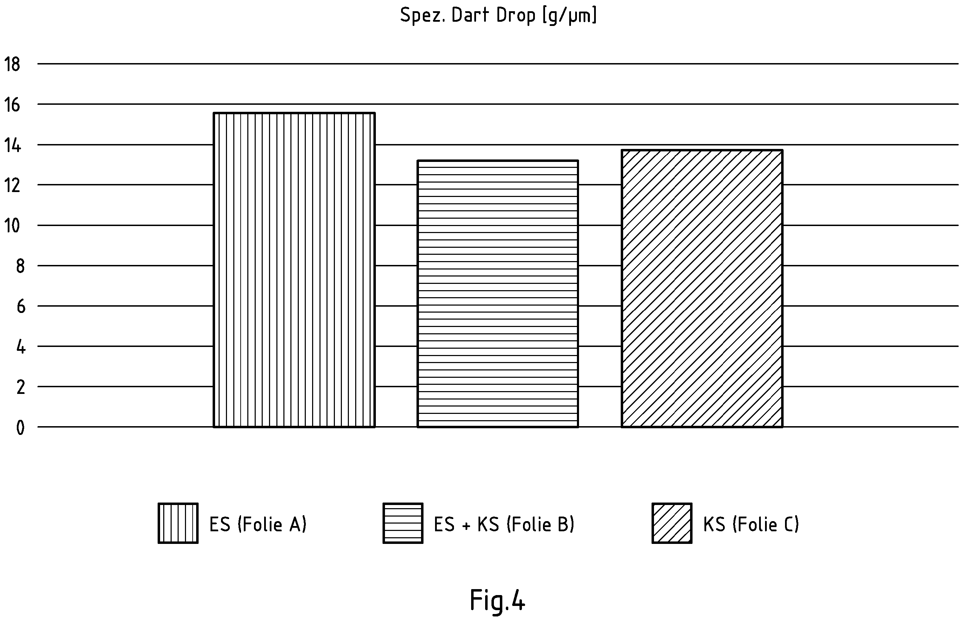

Fig. 4 zeigt einen Vergleich des spez. Dart Drops einer aus einer erbsenstärkehaltigen Polymerzusammensetzung hergestellten Blasfolie (Folie A), einer aus einer erbsenund kartoffelstärkehaltigen Polymerzusammensetzung hergestellten Blasfolie (Folie B) und einer aus einer kartoffelstärkehaltigen Polymerzusammensetzung C hergestellten Blasfolie (Folie C).

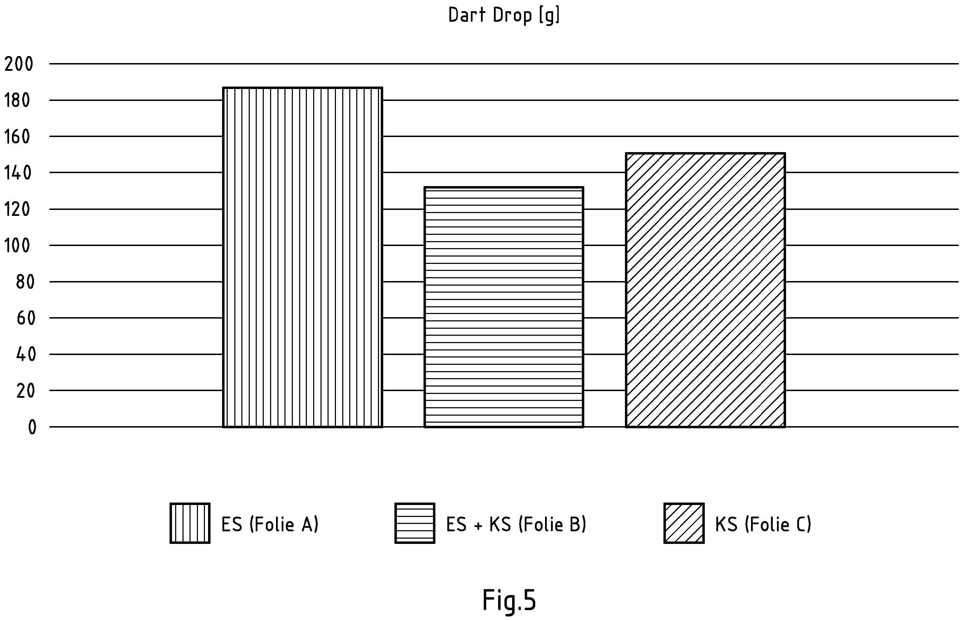

Fig. 5 zeigt einen Vergleich des Dart Drops einer aus einer erbsenstärkehaltigen Polymerzusammensetzung hergestellten Blasfolie (Folie A), einer aus einer erbsenund kartoffelstärkehaltigen Polymerzusammensetzung hergestellten Blasfolie (Folie B) und einer aus einer kartoffelstärkehaltigen Polymerzusammensetzung C hergestellten Blasfolie (Folie C).

### Ausführungsbeispiele

Für die Vergleichs- und Ausführungsbeispiele wurden die folgende Materialien verwendet: Poly(butylenadipat-co-terephthalat), PBAT (ECOFLEX F Blend 1201, BASF); native Erbsenstärke; native Kartoffelstärke (EMSLANDSTÄRKE); Sorbitanmonostearat (Atmer 103, Croda).

Die Eigenschaften der hergestellten Folien wurden gemäß den folgenden Normen bestimmt. Die Foliendicke wurde gemäß Norm DIN EN ISO 2286-3:1998 bestimmt. Die Zugfestigkeit wurde gemäß Norm EN ISO 527 bestimmt. Die Reißdehnung wurde gemäß Norm EN ISO 527 bestimmt. Die Weiterreißfestigkeit wurde gemäß Norm EN ISO 6383 bestimmt. Der Dart Drop wurde gemäß Norm ASTM D 1709 bestimmt. Der Spez. Dart Drop wurde bestimmt, indem der Dart Drop durch die Dicke der Folie an der dünnsten Stelle der Folie geteilt wurde.

### Beispiel 1 (Herstellung von Polymerzusammensetzungen)

Mit einem Zweiwellenextruder (Gleichläufer) des Typs *Werner& Pfleiderer* (*COPERION*) ZSK 40, Schneckendurchmesser 40 mm, L/D = 42, wurden folgende Rezepturen A, B und C compoundiert. Die Angaben beziehen sich jeweils auf die eingesetzten Anteile in Massenprozent, bezogen auf das Gesamtgewicht der Rezepturen (nicht Gesamttrockengewicht). Rezeptur C dient dabei als Vergleichsbeispiel.

**Tab. 1: Rezepturen**

| | **A** | **B** | **C** |
|---|---|---|---|
| PBAT | 68 | 65 | 65 |
| Erbsenstärke | 31,4 | 17,3 | - |
| Kartoffelstärke | - | 17,3 | 34,6 |
| Sorbitanmonostearat | 0,6 | 0,4 | 0,4 |

Dabei wurden folgende Compoundierparameter eingehalten:

**Tab. 2: Temperaturprofil der Zonen (Z) ZSK 40 (in °C)**

| Z1 | Z2 | Z3 | Z4 | Z5 | Z6 | Z7 | Z8 | Z9 | Z10 | Z11 | Z12 |
|---|---|---|---|---|---|---|---|---|---|---|---|
| 0 | 190 | 190 | 190 | 190 | 170 | 160 | 160 | 160 | 150 | 140 | 0 |

| | |
|---|---|
| Drehzahl: | 200 min⁻¹ |
| Durchsatz: | 40 kg/h |

### Beispiel 2 (Herstellung von Blasfolien)

Die Polymerzusammensetzungen A, B und C aus Beispiel 1 wurden mit einem Einwellenextruder des Typs *COLLIN 30* (*DR. COLLIN*), Schneckendurchmesser 30 mm, L/D = 33, aufgeschmolzen und zu Blasfolie weiterverarbeitet.

Dabei wurden folgende Verarbeitungsparameter eingestellt:

| | |
|---|---|
| Gebläse: | 39-40 % |
| Liegebreite Folienschlauch: | 325 mm |
| Durchsatz: | 161 g/min |
| Aufblasverhältnis: | 3,44 |
| Massetemperatur: | 176 °C |
| Massedruck: | 198 bar (A), 167 bar (B), 190 bar (C) |
| Drehzahl: | 59 min⁻¹ |

### Beispiel 3 (Mechanische Eigenschaften der Folien)

Die mechanischen Eigenschaften der aus den Polymerzusammensetzungen A, B und C hergestellten Folien (Folie A, Folie B und Folie C) wurden bei Raumtemperatur und Umgebungsatmosphäre wie folgt bestimmt:

**Tab. 4: Mechanische Eigenschaften der Folien**

| Polymerzusammensetzung | | A | B | C |
|---|---|---|---|---|
| Foliendicke Ø [µm] | | 14,4 | 13,3 | 13,85 |
| Zugfestigkeit [MPa] | längs | 33,88 | 31,09 | 27,31 |
| | quer | 20,47 | 18,84 | 18,26 |
| | Naht längs | 24 | 25,27 | 20,35 |
| Reißdehnung [%] | längs | 543,6 | 471,04 | 508,04 |
| | quer | 500,73 | 537,35 | 497,31 |
| | Naht längs | 273,44 | 274,74 | 275,9 |
| Weiterreißfestigkeit [N/mm] | längs | 84,91 | 98,21 | 77,03 |
| | quer | 95,69 | 138,17 | 83,92 |
| Spez. Dart Drop [g/µm] | | 15,56 | 13,18 | 13,71 |
| Dart Drop [g] | | 186,73 | 131,89 | 150,86 |

Die aus den Polymerzusammensetzungen A, B und C hergestellten Folien weisen vergleichbare Foliendicken auf.

Auffallend und überraschend ist, dass die Zugfestigkeit der erbsenstärkehaltigen Folien (A und B) in allen drei Richtungen (Längsrichtung, Querrichtung und an der Naht in Längsrichtung) signifikant höher ist als die Zugfestigkeit der erbsenstärkefreien Folie (C) (Fig. 1). In Längsrichtung und Querrichtung ist die Zugfestigkeit der Folie A, die als Stärkeanteil nur Erbsenstärke enthält, am höchsten. An der Naht in Längsrichtung ist die Zugfestigkeit der Folie B, die eine Mischung aus Erbsenstärke und Kartoffelstärke enthält, am höchsten.

Beim Vergleich der Reißdehnung der Folien A, B und C lässt sich keine signifikante Tendenz feststellen (Fig. 2). Die Abweichungen liegen im üblichen Streubereich (±10 %) der verwendeten Methode.

Auffallend ist, dass die erbsenstärkehaltigen Folien A und B in Längs- und Querrichtung eine signifikant höhere Weiterreißfestigkeit als die erbsenstärkefreie Folie C aufweisen (Fig. 3). Die Weiterreißfestigkeit der Folie B, die sowohl Erbsenstärke, als auch Kartoffelstärke enthält ist besonders hoch.

Folie A, die als Stärkeanteil ausschließlich Erbsenstärke enthält, weist im Vergleich zu Folien B und C einen besonders hohen spez. Dart Drop (Fig. 4) und Dart Drop (Fig. 5) auf.

Überraschenderweise führt die in den Polymerzusammensetzungen enthaltene Erbsenstärke zu verbesserten mechanischen Eigenschaften, insbesondere zu einer verbesserten Zugfestigkeit, Weiterreißfestigkeit und zu einem verbesserten Dart Drop von daraus hergestellten Blasfolien.

## Patentansprüche

1. Polymerzusammensetzung enthaltend, jeweils bezogen auf das Gesamttrockengewicht der Polymerzusammensetzung, wenigstens folgende Komponenten:
a) 25,5 Gew.% bis 50 Gew.% Stärke,
b) 30 Gew.% bis 74,5 Gew.% aliphatisch-aromatischer Copolyester,
**dadurch gekennzeichnet, dass** die Stärke mindestens 25 Gew.% Erbsenstärke, bezogen auf das Gesamttrockengewicht der Stärke, enthält.

2. Polymerzusammensetzung nach Anspruch 1, **dadurch gekennzeichnet, dass** die Polymerzusammensetzung, jeweils bezogen auf das Gesamtgewicht der Polymerzusammensetzung, Wasser in einer Menge von 0,01 Gew.% bis 5 Gew.%, insbesondere 0,03 Gew.% bis 3 Gew.%, 0,04 Gew.% bis 1,5 Gew.% oder 0,05 Gew.% bis 1 Gew.%, enthält.

3. Polymerzusammensetzung nach Anspruch 1 oder 2, **dadurch gekennzeichnet, dass** die Stärke mindestens 30 Gew.%, insbesondere mindestens 40 Gew.%, mindestens 50 Gew.%, mindestens 60 Gew.%, mindestens 70 Gew.%, mindestens 80 Gew.%, mindestens 90 Gew.%, mindestens 95 Gew.%, mindestens 97 Gew.%, oder mindestens 99 Gew.% Erbsenstärke, jeweils bezogen auf das Gesamttrockengewicht der Stärke, enthält.

4. Polymerzusammensetzung nach einem der vorstehenden Ansprüche, **dadurch gekennzeichnet, dass** die Stärke in der Polymerzusammensetzung in destrukturierter Form vorliegt.

5. Polymerzusammensetzung nach einem der vorstehenden Ansprüche, **dadurch gekennzeichnet, dass** die Polymerzusammensetzung, jeweils bezogen auf das Gesamttrockengewicht der Polymerzusammensetzung, 27 Gew.% bis 45 Gew.%, insbesondere 28,5 Gew.% bis 40 Gew.% oder 30 Gew.% bis 35 Gew.% Stärke, enthält.

6. Polymerzusammensetzung nach einem der vorstehenden Ansprüche, **dadurch gekennzeichnet, dass** der aliphatisch-aromatische Copolyester ein Copolyester auf Basis von mindestens einer aliphatischen Dicarbonsäure mit 7 bis 22 Kohlenstoffatomen, einer aromatischen Dicarbonsäure mit 8 bis 20 Kohlenstoffatomen und einem Diol mit 2 bis 12 Kohlenstoffatomen ist.

7. Polymerzusammensetzung nach einem der vorstehenden Ansprüche, **dadurch gekennzeichnet, dass** der aliphatisch-aromatische Copolyester ein statistischer Copolyester ist.

8. Polymerzusammensetzung nach einem der vorstehenden Ansprüche, **dadurch gekennzeichnet, dass** der aliphatisch-aromatische Copolyester ein Copolyester auf Basis von mindestens Adipin- und/oder Sebacinsäure, insbesondere ein Copolyester auf Basis von mindestens Adipinsäure, ist.

9. Polymerzusammensetzung nach einem der vorstehenden Ansprüche, **dadurch gekennzeichnet, dass** der aliphatisch-aromatische Copolyester ein statistischer Copolyester auf Basis von 1,4-Butandiol, Adipinsäure und/oder Sebacinsäure und Terephthalsäure bzw. Terephthalsäurederivat wie Dimethylterephthalat (DMT),insbesondere ein statistischer Copolyester auf Basis von 1,4-Butandiol, Adipinsäure und Terephthalsäure bzw. Terephthalsäurederivat, insbesondere Dimethylterephthalat (DMT), ist.

10. Polymerzusammensetzung nach einem der vorstehenden Ansprüche, **dadurch gekennzeichnet, dass** die Polymerzusammensetzung, jeweils bezogen auf das Gesamttrockengewicht der Polymerzusammensetzung, 40 Gew.% bis 74,5 Gew.%, insbesondere 50 Gew.% bis 74,5 Gew.%, 55 Gew.% bis 70 Gew.% oder 60 Gew.% bis 70 Gew.% aliphatisch-aromatischen Copolyester, enthält.

11. Polymerzusammensetzung nach einem der vorstehenden Ansprüche, **dadurch gekennzeichnet, dass** die Polymerzusammensetzung, jeweils bezogen auf das Gesamttrockengewicht der Polymerzusammensetzung, 0,1 Gew.% bis 5 Gew.%, insbesondere 0,2 Gew.% bis 2 Gew.% oder 0,3 Gew.% bis 1 Gew.% Verarbeitungshilfsmittel, insbesondere Sorbitanmonostearat, enthält.

12. Polymerzusammensetzung nach einem der vorstehenden Ansprüche, **dadurch gekennzeichnet, dass** die Polymerzusammensetzung, bezogen auf das Gesamttrockengewicht der Polymerzusammensetzung, weniger als 5 Gew.%, insbesondere weniger als 3 Gew.% oder weniger als 1 Gew.%, Kohlenstoff-enthaltende Weichmacher, insbesondere Glycerin oder Sorbitol, enthält oder die Polymerzusammensetzung frei bzw. im wesentlichen frei von Kohlenstoff-enthaltenden Weichmacher ist.

13. Polymerzusammensetzung nach einem der vorstehenden Ansprüche, **dadurch gekennzeichnet, dass** die Polymerzusammensetzung gemäß EN 13432 biologisch abbaubar, insbesondere vollständig biologisch abbaubar, ist.

14. Verfahren zur Herstellung einer Polymerzusammensetzung nach einem der Ansprüche 1 bis 13, **gekennzeichnet durch** folgende Schritte:
(i) Herstellen eines Gemischs durch Mischen von, jeweils bezogen auf das Gesamttrockengewicht des Gemisches, wenigstens:
a) 25,5 Gew.% bis 50 Gew.% Stärke,
b) 30 Gew.% bis 74,5 Gew.% aliphatisch-aromatischem Copolyester, wobei die Stärke mindestens 25 Gew.% Erbsenstärke, bezogen auf das Gesamttrockengewicht der Stärke, enthält;
(ii) Homogenisieren des Gemischs unter Zuführen von thermischer und/oder mechanischer Energie;
(iii) Einstellen des Wassergehalts des Gemischs, so dass das Endprodukt einen Wassergehalt von kleiner 5 Gew.%, bezogen auf das Gesamtgewicht des Gemischs, aufweist.

15. Verfahren nach Anspruch 14, **dadurch gekennzeichnet, dass** das Homogenisieren des Gemischs durch Dispergieren, Einwirken von Scherkräften auf das Gemisch, Rühren, Kneten und/oder Extrudieren erfolgt.

16. Verfahren nach einem der Ansprüche 14 oder 15, **dadurch gekennzeichnet, dass** das Gemisch beim Homogenisieren bzw. Extrudieren auf eine Temperatur von 90 bis 250 °C, insbesondere 130 bis 220 °C, erwärmt wird.

17. Verfahren nach einem der Ansprüche 14 bis 16, **dadurch gekennzeichnet, dass** der Wassergehalt des Gemischs auf kleiner 3 Gew.%, insbesondere kleiner 1,5 Gew.% oder kleiner 1 Gew.%, bezogen auf das Gesamtgewicht des Gemischs, eingestellt wird.

18. Verfahren nach einem der Ansprüche 14 bis 17, **dadurch gekennzeichnet, dass** der Wassergehalt des Gemischs während des Homogenisierens eingestellt wird.

19. Verfahren nach einem der Ansprüche 14 bis 18, **dadurch gekennzeichnet, dass** der Wassergehalt des Gemischs durch Entgasen des Gemischs, insbesondere durch Entgasen der Schmelze, eingestellt wird und/oder der Wassergehalt des Gemischs durch Trocknen des Gemischs während des Homogenisierens bzw. Extrudierens eingestellt wird.

20. Polymerzusammensetzung erhältlich nach einem Verfahren gemäß einem der Ansprüche 14 bis 19.

21. Verwendung einer Polymerzusammensetzung nach einem der Ansprüche 1 bis 13 oder 20 zum Herstellen von Formteilen, Folien oder Fasern, insbesondere durch Blasfolienextrusion, Flachfolienextrusion oder Spritzgießen, insbesondere zum Herstellen von Folien durch Blasfolienextrusion.

22. Formteile, Folien oder Fasern, enthaltend eine Polymerzusammensetzung nach einem der Ansprüche 1 bis 13 oder 20.

## Claims

1. Polymer composition containing - in each case relative to the total dry weight of the polymer composition - the following components:
a) 25.5 wt% to 50 wt% starch,
b) 30 wt% to 74.5 wt% aliphatic-aromatic co-polyester,
**characterized in that** the starch is at least 25 wt% pea starch, relative to the total dry weight of the starch.

2. Polymer composition according to claim 1, **characterized in that** the polymer composition contains, in each case relative to the total weight of the polymer composition, water in an amount of 0.01 wt% to 5 wt%, and in particular 0.03 wt% to 3 wt%, 0.04 wt% to 1.5 wt%, or 0.05 wt% to 1 wt%.

3. Polymer composition according to claim 1 or 2, **characterized in that** the starch contains at least 30 wt%, and in particular at least 40 wt%, at least 50 wt%, at least 60 wt%, at least 70 wt%, at least 80 wt%, at least 90 wt%, at least 95 wt%, at least 97 wt%, or at least 99 wt%, pea starch, in each case relative to the total dry weight of the starch.

4. Polymer composition according to one of the preceding claims, **characterized in that** the starch in the polymer composition is in destructured form.

5. Polymer composition according to one of the preceding claims, **characterized in that** the polymer composition contains, in each case relative to the total dry weight of the polymer composition, 27 wt% to 45 wt%, and in particular 28.5 wt% to 40 wt%, or 30 wt% to 35 wt%, starch.

6. Polymer composition according to one of the preceding claims, **characterized in that** the aliphatic-aromatic co-polyester is a co-polyester based upon at least one aliphatic dicarboxylic acid having 7 to 22 carbon atoms, an aromatic dicarboxylic acid having 8 to 20 carbon atoms, and a diol having 2 to 12 carbon atoms.

7. Polymer composition according to one of the preceding claims, **characterized in that** the aliphatic-aromatic co-polyester is a statistical copolyester.

8. Polymer composition according to one of the preceding claims, **characterized in that** the aliphatic-aromatic co-polyester is a co-polyester based upon at least adipic acid and/or sebacic acid, and in particular a copolyester based upon at least adipic acid.

9. Polymer composition according to one of the preceding claims, **characterized in that** the aliphatic-aromatic co-polyester is a statistical copolyester based upon 1,4-butanediol, adipic acid, and/or sebacic acid and terephthalic acid or a terephthalic acid derivative such as dimethyl terephthalate (DMT), and in particular a statistical co-polyester based upon 1,4-butanediol, adipic acid, and terephthalic acid or a terephthalic acid derivative, and in particular dimethyl terephthalate (DMT).

10. Polymer composition according to one of the preceding claims, **characterized in that** the polymer composition contains, in each case relative to the total dry weight of the polymer composition, 40 wt% to 74.5 wt%, and in particular 50 wt% to 74.5 wt%, 55 wt% to 70 wt%, or 60 wt% to 70 wt%, aliphatic-aromatic co-polyester.

11. Polymer composition according to one of the preceding claims, **characterized in that** the polymer composition contains, in each case relative to the total dry weight of the polymer composition, 0.1 wt% to 5 wt%, and in particular 0.2 wt% to 2 wt%, or 0.3 wt% to 1 wt%, processing aids, and in particular sorbitan monostearate.

12. Polymer composition according to one of the preceding claims, **characterized in that** the polymer composition contains, relative to the total dry weight of the polymer composition, less than 5 wt%, and in particular less than 3 wt%, or less than 1 wt%, carbon-containing plasticizers, and in particular glycerol or sorbitol, or the polymer composition is free or substantially free of carbon-containing plasticizers.

13. Polymer composition according to one of the preceding claims, **characterized in that** the polymer composition is biodegradable, and in particular completely biodegradable, in accordance with EN 13432.

14. Process for producing a polymer composition according to one of claims 1 through 13, **characterized by** the following steps:
(i) preparing a mixture by mixing, in each case relative to the total dry weight of the mixture, at least:
a) 25.5 wt% to 50 wt% starch,
b) 30 wt% to 74.5 wt% aliphatic-aromatic co-polyester,
wherein the starch contains at least 25 wt% pea starch, relative to the total dry weight of the starch;
(ii) homogenizing the mixture using thermal and/or mechanical energy;
(iii) adjusting the water content of the mixture so that the end product has a water content of less than 5 wt%, relative to the total weight of the mixture.

15. Process according to claim 14, **characterized in that** the mixture is homogenized by dispersion, the action of shear forces on the mixture, stirring, kneading, and/or extruding.

16. Process according to one of claims 14 or 15, **characterized in that** the mixture is heated to a temperature of 90 to 250 °C, and in particular 130 to 220 °C, during the homogenization and/or extrusion.

17. Process according to one of claims 14 through 16, **characterized in that** the water content of the mixture is adjusted to less than 3 wt%, and in particular less than 1.5 wt% or less than 1 wt%, relative to the total weight of the mixture.

18. Process according to one of claims 14 through 17, **characterized in that** the water content of the mixture is adjusted during the homogenization.

19. Process according to one of claims 14 through 18, **characterized in that** the water content of the mixture is adjusted by degassing the mixture, and in particular by degassing the melt, and/or the water content of the mixture is adjusted by drying the mixture during the homogenization and/or extrusion.

20. Polymer composition obtainable by a process according to one of claims 14 through 19.

21. Use of a polymer composition according to one of claims 1 through 13 or 20 for producing moldings, films, or fibers - in particular, by blown film extrusion, flat film extrusion, or injection molding - and in particular for producing films by blown film extrusion.

22. Moldings, films, or fibers containing a polymer composition according to one of claims 1 through 13 or 20.

## Revendications

1. Composition polymère contenant, respectivement par rapport au poids total sec de la composition polymère, au moins les constituants suivants :
a) 25,5 % en poids à 50 % en poids d'amidon,
b) 30 % en poids à 74,5 % en poids de copolyester aliphatique-aromatique,
**caractérisée en ce que** l'amidon contient au moins 25 % en poids d'amidon de pois, par rapport au poids total sec de l'amidon.

2. Composition polymère selon la revendication 1, **caractérisée en ce que** la composition polymère contient, respectivement par rapport au poids total de la composition polymère, de l'eau en une quantité allant de 0,01 % en poids à 5 % en poids, en particulier de 0,03 % en poids à 3 % en poids, de 0,04 % en poids à 1,5 % en poids ou de 0,05 % en poids à 1 % en poids.

3. Composition polymère selon la revendication 1 ou 2, **caractérisée en ce que** l'amidon contient au moins 30 % en poids, en particulier au moins 40 % en poids, au moins 50 % en poids, au moins 60 % en poids, au moins 70 % en poids, au moins 80 % en poids, au moins 90 % en poids, au moins 95 % en poids, au moins 97 % en poids, ou au moins 99 % en poids d'amidon de pois, respectivement par rapport au poids total sec de l'amidon.

4. Composition polymère selon l'une des revendications précédentes, **caractérisée en ce que** l'amidon est présent dans la composition polymère sous forme déstructurée.

5. Composition polymère selon l'une des revendications précédentes, **caractérisée en ce que** la composition polymère contient, respectivement par rapport au poids total sec de la composition polymère, 27 % en poids à 45 % en poids, en particulier 28,5 % en poids à 40 % en poids ou 30 % en poids à 35 % en poids d'amidon.

6. Composition polymère selon l'une des revendications précédentes, **caractérisée en ce que** le copolyester aliphatique-aromatique est un copolyester à base d'au moins un acide dicarboxylique aliphatique comportant 7 à 22 atomes de carbone, un acide dicarboxylique aromatique comportant 8 à 20 atomes de carbone et un diol comportant 2 à 12 atomes de carbone.

7. Composition polymère selon l'une des revendications précédentes, **caractérisée en ce que** le copolyester aliphatique-aromatique est un copolyester statistique.

8. Composition polymère selon l'une des revendications précédentes, **caractérisée en ce que** le copolyester aliphatique-aromatique est un copolyester à base d'au moins l'acide adipique et/ou l'acide sébacique, en particulier un copolyester à base d'au moins l'acide adipique.

9. Composition polymère selon l'une des revendications précédentes, **caractérisée en ce que** le copolyester aliphatique-aromatique est un copolyester statistique à base de 1,4-butanediol, d'acide adipique et/ou d'acide sébacique et d'acide téréphtalique ou de dérivé de l'acide téréphtalique tel que le téréphtalate de diméthyle (DMT), en particulier un copolyester statistique à base de 1,4-butanediol, d'acide adipique et d'acide téréphtalique ou de dérivé de l'acide téréphtalique, en particulier de téréphtalate de diméthyle (DMT).

10. Composition polymère selon l'une des revendications précédentes, **caractérisée en ce que** la composition polymère contient, respectivement par rapport au poids total sec de la composition polymère, 40 % en poids à 74,5 % en poids, en particulier 50 % en poids à 74,5 % en poids, 55 % en poids à 70 % en poids ou 60 % en poids à 70 % en poids de copolyester aliphatique-aromatique.

11. Composition polymère selon l'une des revendications précédentes, **caractérisée en ce que** la composition polymère contient, respectivement par rapport au poids total sec de la composition polymère, 0,1 % en poids à 5 % en poids, en particulier 0,2 % en poids à 2 % en poids ou 0,3 % en poids à 1 % en poids d'auxiliaires de traitement, en particulier de monostéarate de sorbitane.

12. Composition polymère selon l'une des revendications précédentes, **caractérisée en ce que** la composition polymère contient, par rapport au poids total sec de la composition polymère, moins de 5 % en poids, en particulier moins de 3 % en poids ou moins de 1 % en poids de plastifiants contenant du carbone, en particulier de glycérol ou de sorbitol, ou la composition polymère est exempte ou sensiblement exempte de plastifiants contenant du carbone.

13. Composition polymère selon l'une des revendications précédentes, **caractérisée en ce que** la composition polymère est biodégradable conformément à la norme EN 13432, en particulier complètement biodégradable.

14. Procédé pour la production d'une composition polymère selon l'une des revendications 1 à 13, **caractérisé par** les étapes suivantes :
(i) production d'un mélange en mélangeant, respectivement par rapport au poids total sec du mélange, au moins :
a) 25,5 % en poids à 50 % en poids d'amidon,
b) 30 % en poids à 74,5 % en poids de copolyester aliphatique-aromatique,
dans lequel l'amidon contient au moins 25 % en poids d'amidon de pois, par rapport au poids total sec de l'amidon ;
(ii) homogénéisation du mélange en introduisant de l'énergie thermique et/ou mécanique ;
(iii) ajustement de la teneur en eau du mélange, de sorte que le produit final présente une teneur en eau inférieure à 5 % en poids, par rapport au poids total du mélange.

15. Procédé selon la revendication 14, **caractérisé en ce que** l'homogénéisation du mélange est réalisée par dispersion, application de forces de cisaillement sur le mélange, agitation, malaxage et/ou extrusion.

16. Procédé selon l'une des revendications 14 ou 15, **caractérisé en ce que,** lors de l'homogénéisation ou de l'extrusion, le mélange est chauffé à une température allant de 90 à 250 °C, en particulier de 130 à 220 °C.

17. Procédé selon l'une des revendications 14 à 16, **caractérisé en ce que** la teneur en eau du mélange est ajustée à une valeur inférieure à 3 % en poids, en particulier inférieure à 1,5 % en poids ou inférieure à 1 % en poids, par rapport au poids total du mélange.

18. Procédé selon l'une des revendications 14 à 17, **caractérisé en ce que** la teneur en eau du mélange est ajustée pendant l'homogénéisation.

19. Procédé selon l'une des revendications 14 à 18, **caractérisé en ce que** la teneur en eau du mélange est ajustée par dégazage du mélange, en particulier par dégazage de la masse fondue, et/ou la teneur en eau du mélange est ajustée par séchage du mélange pendant l'homogénéisation ou l'extrusion.

20. Composition polymère pouvant être obtenue lors d'un procédé selon l'une des revendications 14 à 19.

21. Utilisation d'une composition polymère selon l'une des revendications 1 à 13 ou 20 pour la production de pièces moulées, de films ou de fibres, en particulier par extrusion de films soufflés, par extrusion de films plats ou par moulage par injection, en particulier pour la production de films par extrusion de films soufflés.

22. Pièces moulées, films ou fibres, contenant une composition polymère selon l'une des revendications 1 à 13 ou 20.
